# EUROPEAN PATENT APPLICATION

(11) **EP 3 806 382 A1**
(43) Date of publication of application: **14.04.2021**
(21) Application number: 19918790.7
(22) Date of filing: 28.06.2019
(51) Int. Cl.: H04L 9/08, H04L 29/06

(54) **VIRTUAL KEY BINDING METHOD AND SYSTEM**

(30) Priority: 12.03.2019 CN 201910187024
(71) Applicant: Guangzhou Xiaopeng Motors Technology Co., Ltd., Guangzhou, Guangdong 510000 (CN)
(72) Inventor: CHENG, Ziyao, Guangzhou, Guangdong 510000 (CN)
(74) Representative: Lin Chien, Mon-Yin
(86) International application number: PCT/CN2019/093474
(87) International publication number: WO 2020/181691

(57) **Abstract**

The present invention relates to the technical field of vehicles. Disclosed are a virtual key binding method and system, the method comprising: upon detecting an input binding instruction, a terminal device extracts a device fingerprint of the terminal device and generates a service key; generates device feature information comprising the device fingerprint and service key, and sends the device feature information to a service server, so that the service server stores the device feature information in an on-board electronic device on a vehicle to be bound; and upon detecting that the binding result sent by the service server indicates successful binding, the terminal device stores Bluetooth information in the binding result, the Bluetooth information matching information of said vehicle. By implementing embodiments of the present invention the security of data transmission during a binding process between a terminal device and an on-board electronic device on the vehicle can be improved.

## Description

### TECHNICAL FIELD

The present application relates to a vehicle technical field, and particularly to a method and a system for binding a virtual key.

### BACKGROUND

With the development and popularization of Internet of Things, some automobile manufacturers choose to use card-type car keys to replace traditional physical keys. At present, the card-type car key needs to be bound to the vehicle before the card-type car key is used. Usually the way that the card-type car key bound to the vehicle is: when the card-type car key is close to the vehicle, the card-type car key can be connected to a terminal device in the vehicle via the Bluetooth protocol stack to realize a simple matching certification, and after certification, it can be determined that the card-type car key is bound to the vehicle.

However, it has been found in practice that the current data transmission during the binding process of the card-type car key and the in-vehicle electronic device is completely dependent on the Bluetooth protocol stack. Because different Bluetooth protocol stacks correspond to different security levels, and lower level of security of the Bluetooth protocol stack may have problems during use such as channel hijacking or channel interference. Therefore, the above-mentioned method for binding the card-type car key and the vehicle cannot guarantee the security of data transmission.

### SUMMARY

Therefore, the present application provides a method and a system for binding a virtual key, which can improve the security of data transmission between the key and the vehicle during the binding process.

In a first aspect, the embodiment of the present application discloses a method for binding a virtual key. Wherein the method may include:

When detecting an input binding command, a terminal device extracting its device fingerprint and generating a service key; generating, by the terminal device, device feature information includes the device fingerprint and the service key; sending, by the terminal device, the device feature information to a service server, thereby enabling the service server to store the device feature information in an in-vehicle electronic device of a waited to be bound vehicle; and when detecting that a binding result sent from the service server is a successful binding, the terminal device storing Bluetooth information in the binding result, the Bluetooth information matching with the waited to be bound vehicle.

As an optional implementation, in the first aspect of the embodiment of the present application, wherein the operation of when detecting that the binding result sent from the service server is a successful binding, the terminal device storing Bluetooth information in the binding result may include: extracting, by the terminal device, a plurality of device fingerprint feature values of the terminal device when detecting the input binding command; and generating, by the terminal device, the device fingerprint according to the plurality of device fingerprint feature values, and generating a service key, wherein the service key is a service public-private key pair or a service symmetric key.

In a second aspect, the embodiment of the present application discloses another method for binding a virtual key. Wherein the method may include: when receiving device feature information sent from a terminal device, a service server associating and storing a device fingerprint and a service key included in the device feature information, user account information of the terminal device, and waited to be bound vehicle information matched with the user account information; and the service server sending the device feature information to a security server, thereby the security server performing a signature and encryption operation on the device feature information; when detecting that target device feature information, after the signature and encryption operation, is fed back by the security server, the service server sending the target device feature information to an in-vehicle electronic device matched with the waited to be bound vehicle information, thereby making the in-vehicle electronic device to store the target device feature information; and when receiving a binding result sent from the in-vehicle electronic device, the service server sending the binding result to the terminal device.

As an optional implementation, in the second aspect of the embodiment of the present application, wherein the operation of when receiving the binding result sent from the in-vehicle electronic device, the service server sending the binding result to the terminal device may include: when receiving the binding result sent from the in-vehicle electronic device, the service server determining whether the binding result is a successful binding; when the binding result is the successful binding, the service server acquiring Bluetooth information included in the binding result, wherein the Bluetooth information at least includes a Bluetooth address and a Bluetooth name; and the service server associating and storing the Bluetooth information, the user account information of the terminal device, the waited to be bound vehicle information, and the device fingerprint and the service key included in the device feature information; and the service server sending the binding result to the terminal device.

In a third aspect, the embodiment of the present application discloses another method for binding a virtual key. Wherein the method may include: when receiving device feature information sent by a service server, a security server performing a signature and encryption operation on the device feature information thereby obtaining target device feature information; and the security server sending the target device feature information to the service server.

As an optional implementation, in the third aspect of the embodiment of the present application, wherein the operation of when receiving device feature information sent by the service server, the security server performing a signature and encryption operation on the device feature information thereby obtaining target device feature information may include: when receiving the device feature information sent by the service server, the security server applying a digital signature on the device feature information through a preset private key, thereby obtaining signature device feature information; and the security server performing a symmetric encryption operation on the signature device feature information with a preset symmetric key, thereby obtaining the target device feature information.

In a fourth aspect, the embodiment of the present application discloses another method for binding a virtual key. Wherein the method may include: when an in-vehicle security module of an in-vehicle electronic device receiving target device feature information sent form a service server, the in-vehicle electronic device performing an decryption and verification operation on the target device feature information via the in-vehicle security module, thereby obtaining current device feature information;
the in-vehicle electronic device storing the current device feature information via an external Bluetooth module and transmitting a storage result and Bluetooth information corresponding to the external Bluetooth module to the in-vehicle security module, wherein the Bluetooth information includes a Bluetooth address and a Bluetooth name of the external Bluetooth module; and the in-vehicle electronic device generating, via the in-vehicle security module, a binding result including the storage result and the Bluetooth information, and the in-vehicle electronic device, via the in-vehicle security module, sending the binding result to the service server.

In a fifth aspect, the embodiment of the present application discloses a terminal device. Wherein the device may include: an extracting module, a generating module, a first sending module and a first storing module. The extracting module is configured to when detecting a input binding command extract its device fingerprint and generates a service key. The generating module is configured to generate device feature information includes the device fingerprint and the service key. The first sending module is configured to send the device feature information to a service server; and the first storing module is configured to store Bluetooth information in the binding result, when detecting that a binding result sent from the service server is a successful binding, the Bluetooth information matching with the waited to be bound vehicle.

As an optional implementation, in the fifth aspect of the embodiment of the present application, wherein the extracting module may include an extracting sub-module and a generating sub-module. The extracting sub-module is configured to extract a plurality of device fingerprint feature values of the terminal, when detecting the input binding command; and the generating sub-module is configured to generate the device fingerprint according to the plurality of device fingerprint feature values, and generate a service key, wherein the service key is a service public-private key pair or a service symmetric key.

In a sixth aspect, the embodiment of the present application discloses a service server. Wherein the server may include a second storing module, a second sending module and a third sending module. The second storing module is configured to store a device fingerprint when receiving device feature information sent from a terminal device and a service key included the device feature information, user account information of the terminal device, and waited to be bound vehicle information matched with the user account information, send the device feature information to a security server, thereby the security server performs a signature and encryption operation on the device feature information. The second sending module is configured to send the target device feature information to an in-vehicle electronic device matched with the waited to be bound vehicle information, when detecting that target device feature information, after the signature and encryption operation, is fed back by the security server, thereby makes the in-vehicle electronic device to store the target device feature information. And the third sending module is configured to send the binding result to the terminal device when receiving a binding result sent from the in-vehicle electronic device.

As an optional implementation, in the sixth aspect of the embodiment of the present application, wherein the third sending module may include a determining sub-module, an acquiring sub-module and a sending sub-module. The determining sub-module is configured to determine whether the binding result is a successful binding when receiving the binding result sent from the in-vehicle electronic device. The acquiring sub-module is configured to acquire Bluetooth information included in the binding result when the binding result is the successful binding, wherein the Bluetooth information at least includes a Bluetooth address and a Bluetooth name. And the sending sub-module is configured to associate and store the Bluetooth information, the user account information of the terminal device, the waited to be bound vehicle information, and the device fingerprint and the service key included in the device feature information, and sends the binding result to the terminal device.

In a seventh aspect, the embodiment of the present application discloses a security server. Wherein the server may include a signing and encrypting module and a fourth sending module. The signing and encrypting module is configured to perform a signature and encryption operation on the device feature information thereby obtains target device feature information when receiving device feature information sent by a service server. And the fourth sending module is configured to send the target device feature information to the service server.

As an optional implementation, in the seventh aspect of the embodiment of the present application, wherein the signing and encrypting module may include a signing sub-module and an encrypting sub-module. The signing sub-module is configured to apply a signature on the device feature information through a preset private key when receiving the device feature information sent by the service server, thereby obtains signature device feature information. And the encrypting sub-module is configured to perform a symmetric encryption operation on the signature device feature information with a preset symmetric key, thereby obtain the target device feature information.

In an eighth aspect, the embodiment of the present application discloses an in-vehicle electronic device. Wherein the device may include a decrypting module, a transmitting module and a fourth sending module. The decrypting module is configured to perform a decryption and verification operation on the target device feature information via the in-vehicle security module when an in-vehicle security module of an in-vehicle electronic device receiving target device feature information sent form a service server, thereby obtains current device feature information. The transmitting module is configured to store the current device feature information via an external Bluetooth module, and transmit a storage result and the Bluetooth information corresponding to the external Bluetooth module to the in-vehicle security module, wherein the Bluetooth information includes a Bluetooth address and a Bluetooth name of the external Bluetooth module. And the fourth sending module is configured to generate, via the in-vehicle security module, a binding result including the storage result and the Bluetooth information, and via the in-vehicle security module, send the binding result to the service server.

In a ninth aspect, the embodiment of the present application discloses a system for binding a virtual key. The system may include a terminal device, a service server, a security server and an in-vehicle electronic device. Wherein: the terminal device, is configured to configured to extract its device fingerprint and generate a service key when detecting a input binding command, generate device feature information including the device fingerprint and the service key, send the device feature information to a service server, thereby enables the service server to store the device feature information in an in-vehicle electronic device of a waited to be bound vehicle, and when detecting that a binding result sent from the service server is a successful binding, store Bluetooth information in the binding result, the Bluetooth information matching with the waited to be bound vehicle. The service server, is configured to store the device fingerprint and the service key included in the device feature information, user account information of the terminal device, and waited to be bound vehicle information matched with the user account information when receiving device feature information sent from a terminal device, send the device feature information to a security server, thereby the security server performs a signature and encryption operation on the device feature information, when detecting that target device feature information, after the signature and encryption operation, is fed back by the security server, send the target device feature information to an in-vehicle electronic device matched with the waited to be bound vehicle information, thereby makes the in-vehicle electronic device to store the target device feature information, and when receiving a binding result sent from the in-vehicle electronic device, send the binding result to the terminal device. The security server, is configured to perform a signature and encryption operation on the device feature information when receiving device feature information sent by the service server thereby obtains target device feature information, and send the target device feature information to the service server. And the in-vehicle electronic device, is configured to perform a decryption and verification operation on the target device feature information via the in-vehicle security module when an in-vehicle security module of an in-vehicle electronic device receiving target device feature information sent form the service server, thereby obtains current device feature information, store the current device feature information via an external Bluetooth module, and transmit a storage result and the Bluetooth information corresponding to the external Bluetooth module to the in-vehicle security module, wherein the Bluetooth information includes a Bluetooth address and a Bluetooth name of the external Bluetooth module, and generates, via the in-vehicle security module, a binding result including the storage result and the Bluetooth information, and via the in-vehicle security module, sends the binding result to the service server.

In a tenth aspect, the embodiment of the present application discloses a vehicle, wherein the vehicle may include an in-vehicle electronic device disclosed in the eighth aspect.

In an eleventh aspect, the embodiment of the present application discloses a computer readable storage medium, wherein the storage medium having program code stored therein, the program code may include instructions for executing part or all of the steps of any one of the first, second, third, and fourth aspects.

In a twelfth aspect, the embodiment of the present application discloses a storage medium having program stored therein, when the program is executed on a computer, the computer is execute part or all of the steps of any one of the first aspect, the second aspect, the third aspect, and the fourth aspect.

In a thirteenth aspect, the embodiment of the present application discloses an application publishing platform, wherein the application publishing platform configured to publish computer program, when the program is executed on a computer, the computer is execute part or all of the steps of any one of the first aspect, the second aspect, the third aspect, and the fourth aspect.

Compared with the prior art, the embodiments of the present application have the following beneficial effects:

In the embodiments of the present application. When the input binding command is detected, the terminal device extracts its device fingerprint and generating a service key, the terminal device generates device feature information includes the device fingerprint and the service key, the terminal device sends the device feature information to a service server, thereby enabling the service server to store the device feature information in an in-vehicle electronic device of a waited to be bound vehicle, and when detecting that a binding result sent from the service server is a successful binding, the terminal device storing Bluetooth information in the binding result, the Bluetooth information matching with the waited to be bound vehicle. It can be seen that implementing the embodiments of the present application can send the device feature information generated by the terminal device to the service server, and bind the device feature information to an in- vehicle electronic device via the service server. So that the binding between the terminal and the in- vehicle electronic device is via the service server, which avoids the problem of data loss that may occur during the data transmission between the terminal device and the in-vehicle electronic device, thereby improving the security of data transmission during the binding process of the terminal device and the in-vehicle electronic device.

### BRIEF DESCRIPTION OF THE DRAWINGS

Specific embodiments of the present application will be described in detail below with reference to the drawings, to enable the technical solutions and other advantageous effects of the present application are apparent.
FIG. 1 is a schematic flowchart view of a method for binding a virtual key of an embodiment of the present application.
FIG. 2 is a schematic flowchart view of a method for binding a virtual key of another embodiment of the present application.
FIG. 3 is a schematic flowchart view of a method for binding a virtual key of another embodiment of the present application.
FIG. 4 is a schematic flowchart view of a method for binding a virtual key of another embodiment of the present application.
FIG. 5 is a schematic flowchart view of a method for binding a virtual key of another embodiment of the present application.
FIG. 6 is a schematic flowchart view of a method for binding a virtual key of another embodiment of the present application.
FIG. 7 is a schematic flowchart view of a method for binding a virtual key of another embodiment of the present application.
FIG. 8 is a schematic structural view of a terminal device of an embodiment of the present application.
FIG. 9 is a schematic structural view of a terminal device of another embodiment of the present application.
FIG. 10 is a schematic structural view of a service server of an embodiment of the present application.
FIG. 11 is a schematic structural view of a service server of another embodiment of the present application.
FIG. 12 is a schematic structural view of a security server of an embodiment of the present application.
FIG. 13 is a schematic structural view of a security server of another embodiment of the present application.
FIG. 14 is a schematic structural view of an in-vehicle electronic device of an embodiment of the present application.
FIG. 15 is a schematic structural view of a system for binding a virtual key to an embodiment of the present application.
FIG. 16 is a schematic flowchart view of a method for binding a virtual key to another embodiment of the present application.

### DETAILED DESCRIPTION OF EMBODIMENTS

Referring to the drawings, wherein the same reference numerals refer to the same components, the principles of the invention are illustrated in the context of a suitable computing environment. The following description is based on the specific embodiments of the invention and should not be construed as limiting of the invention.

It should be noted that the terms "including" and "having" in the embodiments of the present application and the accompanying drawings, and any variations thereof are intended to cover non-exclusive inclusions. For example, a process, method, system, product, or device that includes a series of steps or units is not limited to the listed steps or units, but optionally includes unlisted steps or units, or optionally also includes Other steps or units inherent in these processes, methods, products or equipment.

The present application provides a method and a system for binding a virtual key, it can improve the security of data transmission between the key and the vehicle during the binding process. Detailed description is given below.

### A first embodiment

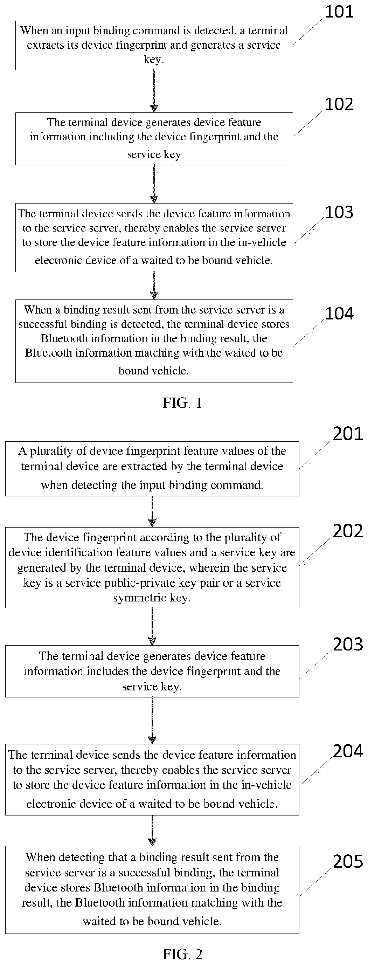

Please refer to FIG. 1, FIG. 1 is a schematic flowchart view of a method for binding a virtual key to the first embodiment of the present application. As shown in FIG. 1, the method includes the following steps:
In a step 101, when an input binding command is detected, a terminal extracts its device fingerprint and generates a service key.

In the embodiment of the present application, the terminal device can be a smart phone, a smart bracelet and other devices. The user who inputs the binding command needs to be the owner of a vehicle but not the driver. The owner can send the binding command to the service server via the owner's terminal device. The service server can read waited to be bound vehicle information and waited to be bound user information included in the binding command. When the service server recognizes that the identity of the waited to be bound user is the owner of the vehicle, the service server sends the binding command to the terminal device of the owner. When the service server recognizes that the identity of the waited to be bound user is the driver, the service server reads the driver's account information from a memory, and sends the binding command to the driver's account, so that the terminal device which the driver logs in can receive the binding command, and then obtains information such as the device fingerprint of the driver's terminal device.

In the embodiment of the present application, the device fingerprint (device fingerprint) can be used to uniquely identify the device feature of the terminal device, so that the terminal device can be uniquely determined according to the device fingerprint.

In the embodiment of the present application, the service key is a service public-private key pair or a service symmetric key. The service key enables the security server to sign and encrypt the device feature information, so that the signature and encrypted device feature information based on the service key, stored in an in-vehicle electronic device, can be recognized by a terminal device which stores the service key.

Further, a security server can perform a digital signature operation on the device feature information. Digital signature is the application of asymmetric encryption technology and digital digest technology, which can be implemented by elliptic curve digital signature algorithm (ECDSA) or RSA encryption algorithm (RSA Algorithm). Specifically, the security server can obtain the digital digest of the device feature information by calculating the device feature information by hash coding (Hash code), obtain digital signature by encrypting the digital digest obtained from the calculation through a private key and encryption algorithm preset by the security server, and sent the encrypted digital signature and the encrypted device feature information to the in-vehicle electronic device at the same time. A public key corresponding to the private key preset by the security server can be pre-stored in the in-vehicle electronic device, and the received digital signature can be decrypted by using the public key to obtain the current digital digest. At the same time, the in-vehicle electronic device can decrypt the encrypted device feature information to obtain the current device feature information, and also can calculate the current device feature information by hash coding to obtain the test digital digest. If the calculated test digital digest is the same as the current digital digest obtained by decryption, it can be determined that the device feature information received by the in-vehicle electronic device and sent from the security server is accurate, and there is no data loss or data omission in the transmission process, which ensures the accuracy of the device feature information received by the in-vehicle electronic device.

In a step 102, the terminal device generates device feature information including the device fingerprint and the service key.

In a step 103, the terminal device sends the device feature information to the service server, thereby enables the service server to store the device feature information in the in-vehicle electronic device of a waited to be bound vehicle.

In the embodiment of the present application, the service server can be a cloud server, and the service server can establish a communication connection with the terminal device to interact with the terminal device and process the data uploaded by the terminal device. The service server can also establish a communication connection with the in-vehicle electronic device to communicate with the in-vehicle electronic device, and perform data interaction and data processing uploaded by the in-vehicle electronic device.

In a step 104, when a binding result sent from the service server is a successful binding is detected, the terminal device stores Bluetooth information in the binding result, the Bluetooth information matching with the waited to be bound vehicle.

In the embodiment of the present application, since the terminal device and the in-vehicle electronic device need to be unlocked based on the Bluetooth pairing after the successful binding, the terminal device needs to store the Bluetooth information corresponding to the Bluetooth key authentication module of the in-vehicle electronic device. Wherein the Bluetooth information at least includes a Bluetooth address and a Bluetooth name, so that the terminal device can match the in-vehicle electronic device arranged on the correct vehicle according to the Bluetooth information.

As an optional implementation, after performing the step 104, the terminal device may also perform the following steps:
when an input unbinding command is detected, the terminal device determines whether the unbinding user type included in the unbinding command is the owner user type; if the unbinding user type included in the unbinding command is the owner type, the terminal device identifies the waited to be unbound vehicle information and the waited to be unbound user account information from the unbinding command; the terminal device generates an unbinding command including the waited to be unbound vehicle information and the waited to be unbound user account information, and sends the unbinding command to the service server; when receiving the unbinding result sent by the service server, the terminal device outputs the unbinding result.

By implementing the above steps, it is possible to respond to the unbinding command submitted by the owner user, and sends the unbinding command including the waited to be unbound vehicle information and the waited to be unbound user account information to the service server, so that the information corresponding to the unbinding command can be deleted accurately by the service server, and the unbinding result is fed back to the terminal device, thereby the user who input the unbinding command can clearly know the unbinding result. It improves the interaction between the terminal device and the user.

In the method described in FIG. 1, the security of data transmission during the binding process between the terminal device and the in-vehicle electronic device of the vehicle can be improved. In addition, it improves the interaction between the terminal device and the user by implementing the method described in FIG. 1.

### A second embodiment

Please refer to FIG. 2, FIG. 2 is a schematic flowchart view of a method for binding a virtual key to the second embodiment of the present application. Comparing to the first embodiment, this embodiment describes the method of extracting the device fingerprint of the terminal device in more details, which can make the information related to the terminal device and contained in the device fingerprint more comprehensive. As shown in FIG. 2, the method may include the following steps:

In a step 201, a plurality of device fingerprint feature values of the terminal device are extracted by the terminal device when detecting the input binding command.

In the embodiment of the present application, the device fingerprint of the terminal device can be generated based on the extracted device fingerprint feature values of the terminal device. The device fingerprint feature value can be the device model, serial number, hardware version and other information, and the device fingerprint of the terminal device can be generated based on more than 200 device fingerprint feature values.

In a step 202, the device fingerprint according to the plurality of device fingerprint feature values and a service key are generated by the terminal device, wherein the service key is a service public-private key pair or a service symmetric key.

In the embodiment of the present application, since the device fingerprint of the terminal device is generated base on the plurality of device fingerprint feature values, the device fingerprint of the terminal device needs to contain all the extracted device fingerprint feature values.

In the embodiment of the present application. By implementing the above steps 201 to 202, the plurality of device fingerprint feature values can be extracted, and the device fingerprint generated according to the plurality of device fingerprint feature values, it can make the information related to the terminal device, contained in the device fingerprint more comprehensive.

In a step 203, the terminal device generates device feature information includes the device fingerprint and the service key.

In a step 204, the terminal device sends the device feature information to the service server, thereby enables the service server to store the device feature information in the in-vehicle electronic device of a waited to be bound vehicle.

In a step 205, when detecting that a binding result sent from the service server is a successful binding, the terminal device stores Bluetooth information in the binding result, the Bluetooth information matching with the waited to be bound vehicle.

In the method described in FIG. 2, the security of data transmission during the binding process between the terminal device and the in-vehicle electronic device of the vehicle can be improved. In addition, it can make the information related to the terminal device, contained in the device fingerprint more comprehensive by implementing the method described in FIG. 2.

### A third embodiment

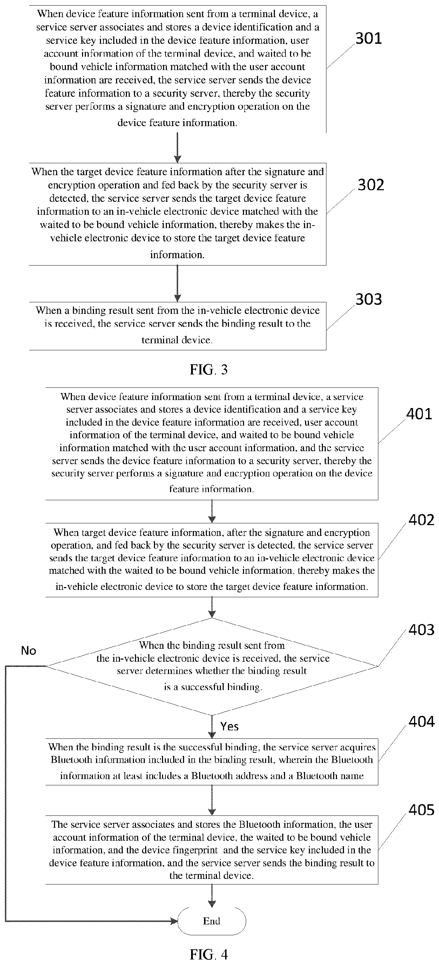

Please refer to FIG. 3, FIG. 3 is a schematic flowchart view of a method for binding a virtual key to the third embodiment of the present application. As shown in FIG. 3, the method may include the following steps:
In a step 301, when device feature information sent from a terminal device, a service server associates and stores a device fingerprint and a service key included in the device feature information, user account information of the terminal device, and waited to be bound vehicle information matched with the user account information are received, the service server sends the device feature information to a security server, thereby the security server performs a signature and encryption operation on the device feature information.

In the embodiment of the present application, the service server can be a cloud server. The service server can process the data sent by the terminal device or the in-vehicle electronic device, and can also store the data uploaded by the terminal device or the in-vehicle electronic device. The service server may establish a data connection with the terminal device or the in-vehicle electronic device in advance, so that the terminal device and the in-vehicle electronic device can send data to the business server at any time. In addition, the service server can also synchronize the device feature information to the security server, so that the security server can perform signature and encryption operations on the device feature information to ensure the security of the device feature information.

In the embodiment of the present application. The user account information and the waited to be bound vehicle information matched with the user account information can be stored in advance by the user. For example, the user can register an account through the terminal device after buying a vehicle, and the registered account can be bound with the vehicle fingerprint number (VIN) of the user's vehicle. In addition, the registered account and the VIN bounded with the registered account can be stored in the service server. When the user needs to bind the virtual key to the user's vehicle, the service server can directly determine user account information and the waited to be bound vehicle information matched with the user account information from the pre-stored information, wherein the waited to be bound vehicle information includes the VIN of the user's vehicle.

In the embodiment of the present application. The service server can identify in advance the user account information of the user who sent the binding command, and can also read the waited to be bound vehicle information and waited to be bound user account information from the binding command, wherein the waited to be bound vehicle information includes the VIN of the user's vehicle, and the target vehicle can be uniquely determined through the VIN of the user's vehicle. The waited to be bound user account information may include information such as the phone number and serial number of the waited to be bound user, which is not limited in the embodiment of the present application. The service server can store the device feature information, user account information of the terminal device, and waited to be bound vehicle information matched with the user account information. Therefore, the service server can determine other information that matches any one of the device feature information, user account information of the terminal device, and waited to be bound vehicle information matched with the user account information, according to any one thereof. The correlation between the device feature information, user account information of the terminal device, and waited to be bound vehicle information matched with the user account information is improved. In addition, after storing the device feature information, user account information of the terminal device, and waited to be bound vehicle information matched with the user account information, the service server can also synchronize the stored device feature information to the security server, thereby the security server performs a signature and encryption operation on the device feature information, and sends the device feature information after the signature and encryption operation, to improve the security of the data transmission between the service server and the in-vehicle electronic device.

In a step 302, when the target device feature information after the signature and encryption operation and fed back by the security server is detected, the service server sends the target device feature information to an in-vehicle electronic device matched with the waited to be bound vehicle information, thereby makes the in-vehicle electronic device to store the target device feature information.

In the embodiment of the present application, the service server can find the target vehicle that matches the waited to be bound vehicle information in the memory, and further determine the in-vehicle electronic device information of the in-vehicle electronic device set on the target vehicle. The service server can send the target device feature information to the in-vehicle electronic device matches with the in-vehicle electronic device information according to the received in-vehicle electronic device information. The in-vehicle electronic device can bind the target device feature information with the Bluetooth set on the vehicle, so that the terminal device can communicate with the Bluetooth set on the vehicle when it approaches the vehicle. Based on the connected Bluetooth, the identity verification of the terminal device is realized, so that the user of the vehicle can realize the unlock authentication between the terminal device and the vehicle based on the Bluetooth.

In a step 303, when a binding result sent from the in-vehicle electronic device is received, the service server sends the binding result to the terminal device.

In the embodiment of the present application, since the in-vehicle electronic device has not established a communication connection with the terminal device during the binding phase, the in-vehicle electronic device needs to send the binding result of the target device feature information and the in-vehicle electronic device to the service server, so that the service server sends the binding result to the terminal device, thereby the terminal device gets the binding result. In addition, the binding result can be a successful binding or a failed binding.

As an optional implementation, after performing the step 303, the service server may also perform the following steps:
when an unbinding command sent by the terminal device is received, the service server identifies the waited to be unbound vehicle information and the unbound account information included in the unbinding command, the service server obtains the waited to be unbound device feature information that matches the waited to be unbound vehicle information and the unbound account information, and sends the waited to be unbound device feature information to the security server, so that the security server can sign and encrypt the waited to be unbound device feature information, wherein the waited to be unbound device feature information may include a waited to be unbound device fingerprint and the service key, when receiving the waited to be unbound device feature information after the signature and encryption operation sent from the security server, the service server sends the waited to be unbound device feature information after the signature and encryption operation, to the in-vehicle electronic device that matches the waited to be unbound device feature information when the unbinding result sent from the in-vehicle electronic device is received, the service server sends the unbinding result to the terminal device.

Wherein, by implementing above implementation, the service server can obtain the waited to be unbound device feature information according to the unbinding command, and send the waited to be unbound device feature information after the signature and encryption operation to the in-vehicle electronic device, so that the in-vehicle electronic device deletes the waited to be unbound device feature information, which realizes the unbound operation of the terminal device and the in-vehicle electronic device. Then the unbinding result is sent to the terminal device, so that the user of the terminal device can know the unbinding result in time.

In the method described in FIG. 3, the security of data transmission during the binding process between the terminal device and the in-vehicle electronic device of the vehicle can be improved. In addition, the terminal device can know the unbinding result in time by implementing the method described in FIG. 3.

### A fourth embodiment

Please refer to FIG. 4, FIG. 4 is a schematic flowchart view of a method for binding a virtual key to the fourth embodiment of the present application. Comparing to the third embodiment, this embodiment adds a method for binding the Bluetooth information with the device feature information, which ensures that the information stored in the service server has timeliness. As shown in FIG. 4, the method includes the following steps:
In a step 401, when device feature information sent from a terminal device, a service server associates and stores a device fingerprint and a service key included in the device feature information are received, user account information of the terminal device, and waited to be bound vehicle information matched with the user account information, and the service server sends the device feature information to a security server, thereby the security server performs a signature and encryption operation on the device feature information.
In a step 402, when target device feature information, after the signature and encryption operation, and fed back by the security server is detected, the service server sends the target device feature information to an in-vehicle electronic device matched with the waited to be bound vehicle information, thereby makes the in-vehicle electronic device to store the target device feature information.
In a step 403, when the binding result sent from the in-vehicle electronic device is received, the service server determines whether the binding result is a successful binding. If yes, a step 404 and a step 405 are performed, and if no, the process is end.
   In the embodiment of the present application. When it is determined that the binding result is a successful binding, it can be considered that the in-vehicle electronic device has successfully stored the device feature information after the signature and encryption operation, and the terminal device can successfully connected with the in-vehicle electronic device via the Bluetooth, so the terminal device can implement a unbinding operation on the vehicle which the in-vehicle electronic device set on via the Bluetooth. When it is determined that the binding result is a failed binding, it can be considered that the in-vehicle electronic device has been failed to store the device feature information after the signature and encryption operation, and the terminal device can't implement a unbinding operation on the vehicle which the in-vehicle electronic device set on through the connection with the Bluetooth of the in-vehicle electronic device. Therefore, the service server can re-send the device feature information after the signature and encryption operation to the in-vehicle electronic device, and the in-vehicle electronic device can re-store the device feature information after the signature and encryption operation. In addition, the service server may also send binding failure information to the terminal device, so that the user of the terminal device can perform the binding operation again, ensuring that the user of the terminal device can know the binding result of the terminal device and the in-vehicle electronic device in time.
In the step 404, when the binding result is the successful binding, the service server acquires Bluetooth information included in the binding result, wherein the Bluetooth information at least includes a Bluetooth address and a Bluetooth name.
   In the embodiment of the present application. If the binding result is the successful binding, it can be considered that the in-vehicle electronic device successfully stores the target device feature information in the in-vehicle electronic device that matches the waited to be bound vehicle information. And because the terminal device and the in-vehicle electronic device need to be connected based on the Bluetooth, the in-vehicle electronic device needs to transmit its own Bluetooth information to the terminal device so that the terminal device can successfully connect to the correct Bluetooth. The in-vehicle electronic device can upload its own Bluetooth information (such as the Bluetooth name and the Bluetooth address) contained in the binding result to the service server, and transmit the information includes its own Bluetooth information to the terminal device by the service server.
In the step 405, the service server associates and stores the Bluetooth information, the user account information of the terminal device, the waited to be bound vehicle information, and the device fingerprint and the service key included in the device feature information, and the service server sends the binding result to the terminal device.

In the embodiment of the present application. The service server can associate and store the Bluetooth information with the corresponding device feature information, so that when the binding information of the terminal device and the in-vehicle electronic device is modified or deleted, the binding information of the terminal device and the in-vehicle electronic device can be quickly and comprehensively obtained, thereby ensuring the comprehensiveness of the binding information modified or deleted.

In the embodiment of the present application. By implementing the above steps 403 to 405, the Bluetooth information fed back by the in-vehicle electronic device can be stored in association with the device feature information, so that the service server can associate and store the information of the terminal device and the in-vehicle electronic device with the binding relationship in it, ensuring the information stored in the service server is timeliness.

In the method described in FIG. 4, the security of data transmission during the binding process between the terminal device and the in-vehicle electronic device of the vehicle can be improved. In addition, the timeliness of the information stored in the service server can be improved by implementing the method described in FIG. 4.

### A fifth embodiment

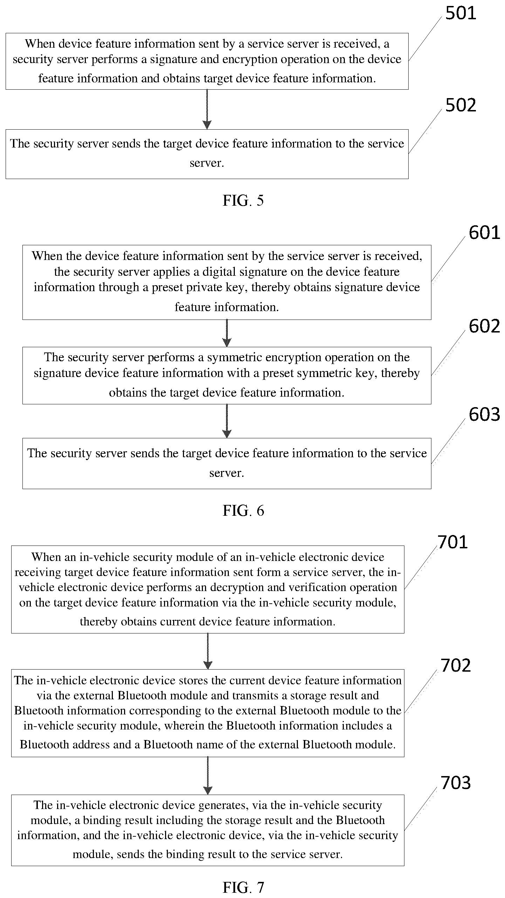

Please refer to FIG. 5, FIG. 5 is a schematic flowchart view of a method for binding a virtual key to the fifth embodiment of the present application. As shown in FIG. 5, the method includes the following steps:
In a step 501, when device feature information sent by a service server is received, a security server performs a signature and encryption operation on the device feature information and obtains target device feature information.

In the embodiment of the present application, the security server may be a device such as a cloud server, which can receive data sent by the service server, or can send data to the service server. The service server can synchronize the device feature information to the security server, so that the security server can operate on the device feature information. After the security server obtains the device feature information, the security server can perform a signature and encryption operation on the device feature information, and also performs asymmetric encryption signature calculations on the device feature information by use a service key and the RSA encryption algorithm, and perform an encryption operation on the device feature information by using the Advanced Encryption Standard (AES), then obtains the target device feature information after signature and encryption operation. When the target device feature information after signature and encryption operation needs to be verified, by using asymmetric encryption, the device for verification needs to has the private key corresponding to the public key of the asymmetric encryption therein. It can be seen that the security of signature device feature information after asymmetric encryption operation is guaranteed.

In a step 502, the security server sends the target device feature information to the service server.

As an optional implementation, after performing the step 502, the security server may also perform the following steps:
the security server performs a signature and encryption operation on the waited to be unbound device feature information, and obtains the waited to be unbound device feature information after signature and encryption operation; the security server sends the waited to be unbound device feature information after signature and encryption operation, to the service server.

Wherein, by implementing above steps, the waited to be unbound device feature information sent by the service server can be signed and encrypted, so that the waited to be unbound device feature information, sent from the service server to the in-vehicle electronic device, is signed and encrypted, ensuring the security of the waited to be unbound device feature information transmission between the service server and the in-vehicle electronic device.

In the method described in FIG. 5, it can improve the security of data transmission in the binding process between the terminal device and the in-vehicle electronic device of the vehicle. In addition, it can ensure the security of the waited to be unbound device feature information between the service server and the in-vehicle electronic device by implementing the method described in FIG. 5.

### A sixth embodiment

Please refer to FIG. 6, FIG. 6 is a schematic flowchart view of a method for binding a virtual key to the sixth embodiment of the present application. Comparing to the fifth embodiment, this embodiment of the present application describes the signature and encryption operations for device feature information in more detail, which ensures the security of data during transmission. As shown in FIG. 6, the method may include the following steps:
In a step 601, when the device feature information sent by the service server is received, the security server applies a digital signature on the device feature information through a preset private key, thereby obtains signature device feature information.

In the embodiment of the present application, the process for the security server to apply the digital signature on the device feature information may be described as follows. The security server can extract a summary of the device feature information, and apply an encryption operation on the extracted digest with a preset private key, to obtain a digital signature, and send the digital signature and the device feature information to the in-vehicle electronic device at the same time. The in-vehicle electronic device stores a public key corresponding to the private key preset in the security server in advance, and decrypts the received digital signature to obtain a current digest by using the public key. The in-vehicle electronic device can compare the current digest with the device feature information received after the encryption operation, and if the current digest is consistent with the device feature information, it can be considered that the device feature information obtained by the decryption of the in-vehicle electronic device is accurate and has not been lost or omissions during transmission, thereby ensures the accuracy of the in-vehicle electronic device to confirm the device feature information.

In a step 602, the security server performs a symmetric encryption operation on the signature device feature information with a preset symmetric key, thereby obtains the target device feature information.

In the embodiment of the present application. By implementing the above steps 601 to 602, the device feature information can be digitally signed, and then the signature device feature information can be encrypted to obtain the encrypted target device feature information, so that the data transmitted with the in-vehicle electronic device is encrypted data, thereby ensuring the security of data during transmission.

In a step 603, the security server sends the target device feature information to the service server.

In the method described in FIG. 6, it can improve the security of data transmission in the binding process between the terminal device and the in-vehicle electronic device of the vehicle. In addition, because the data transmitted with the in-vehicle electronic device is encrypted data, the security of data during the transmission can be ensured by implementing the method described in FIG. 6.

### A seventh embodiment

Please refer to FIG. 7, FIG. 7 is a schematic flowchart view of a method for binding a virtual key to the seventh embodiment of the present application. As shown in FIG. 7, the method may include the following steps:
In a step 701, when an in-vehicle security module of an in-vehicle electronic device receiving target device feature information sent form a service server, the in-vehicle electronic device performs an decryption and verification operation on the target device feature information via the in-vehicle security module, thereby obtains current device feature information.

In the embodiment of the present application, the in-vehicle electronic device can be equipped with software systems such as an in-vehicle system, and the in-vehicle electronic device can control any one of components of the vehicle, thereby facilitating the operation of the user of the vehicle. The in-vehicle electronic device can include an external Bluetooth module and the in-vehicle security module. The external Bluetooth module is configured to establish connection with the terminal device, and store the target device feature information sent by the service server, so that the terminal device can properly connected with the in-vehicle electronic device. The in-vehicle security module is configured to decrypt and verify the target device feature information. Only the in-vehicle security module successfully decrypts the target device feature information and verifies the correctness and integrity of the decrypted target device characteristic information. The current device feature information can be obtained only when the decryption and signature verification operations of the target device feature information are passed.

In a step 702, the in-vehicle electronic device stores the current device feature information via the external Bluetooth module and transmits a storage result and Bluetooth information corresponding to the external Bluetooth module to the in-vehicle security module, wherein the Bluetooth information includes a Bluetooth address and a Bluetooth name of the external Bluetooth module.

In the embodiment of the present application. The external Bluetooth module can be a Bluetooth module set outside the vehicle, and the external Bluetooth module can store the current device feature information. When the external Bluetooth module successfully stores the current device feature information, the external Bluetooth module can transmit the Bluetooth information such as the Bluetooth name and Bluetooth address of the Bluetooth module, and the storing result to the in-vehicle security module.

In a step 703, the in-vehicle electronic device generates, via the in-vehicle security module, a binding result including the storage result and the Bluetooth information, and the in-vehicle electronic device, via the in-vehicle security module, sends the binding result to the service server.

As an optional implementation, after performing the step 703, the in-vehicle electronic device may also perform the following steps:
when the waited to be unbound information after encryption operation, sent form the service server is received by the in-vehicle security module of the in-vehicle electronic device, the in-vehicle electronic device performs a decryption and verification operation on the waited to be unbound device feature information after encryption operation via the in-vehicle security module, thereby obtains target waited to be unbound device feature information; the in-vehicle electronic device deletes the target waited to be unbound device feature information via the external Bluetooth module and transmits a deleting result to the external Bluetooth module; and when the in-vehicle electronic device determines the deleting result is a unbinding result, sends the unbinding result to the service server via the in-vehicle security module.

Wherein, by implementing above steps, the target waited to be unbound device feature information can be found and deleted according to the waited to be unbound information after encryption operation sent from the service server, to realize the unbinding operation of the terminal device and the in-vehicle electronic device, thereby improves the accuracy of the binding operation.

In the method described in FIG. 7, the security of data transmission in the binding process between the terminal device and the in-vehicle electronic device of the vehicle can be improved. In addition, the accuracy of the binding operation can be improved by implementing the method described in FIG. 7.

### A eighth embodiment

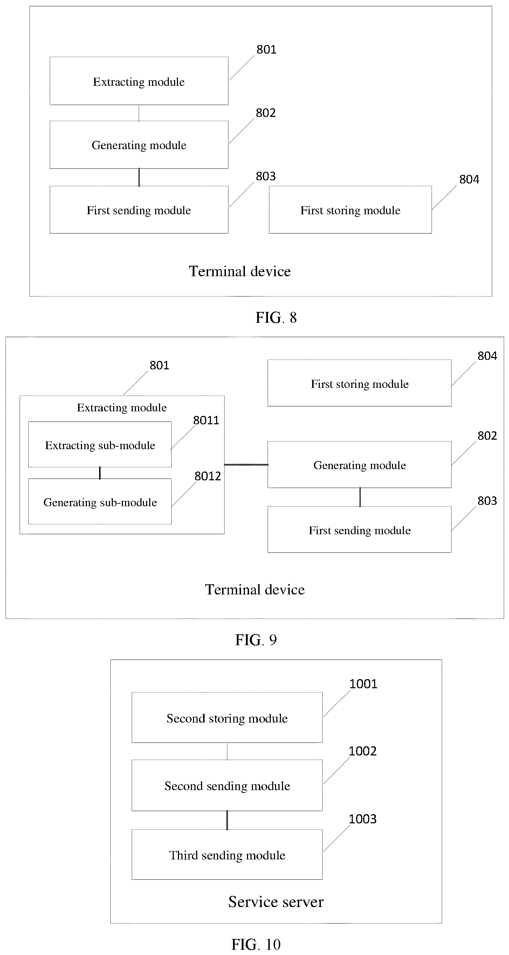

Please refer to FIG. 8, FIG. 8 is a schematic structural view of a terminal device to the eighth embodiment of the present application. As shown in FIG. 8, the terminal device may include an extracting module 801, a generating module 802, a first sending module 803 and a first storing module 804.

The extracting module 801 is configured to extract its device fingerprint and generates a service key, when a input binding command is detected.

The generating module 802 is configured to generate device feature information includes the device fingerprint extracted by the extracting module 801 and the service key.

The first sending module 803 is configured to send the device feature information generated by the generating module 802 to a service server.

The first storing module 804 is configured to store Bluetooth information in the binding result, when that a binding result sent from the service server is a successful binding is detected, the Bluetooth information matching with the waited to be bound vehicle

As an optional implementation, the extracting module 801 is further configured to when an input unbinding command detected, determine whether the unbinding user type included in the unbinding command is the owner user type, if the unbinding user type included in the unbinding command is the owner type, identify the waited to be unbound vehicle information and the waited to be unbound user account information from the unbinding command, and generate an unbinding command including the waited to be unbound vehicle information and the waited to be unbound user account information, and send the unbinding command to the service server, then output the unbinding result when receiving the unbinding result sent by the service server.

Wherein, by implementing the above steps, it is possible to responds to the unbinding command submitted by the owner user, and sends the unbinding command includes the waited to be unbound vehicle information and the waited to be unbound user account information to the service server, so that the information corresponding to the unbinding command can be deleted accurately by the service server, and the unbinding result is fed back to the terminal device, thereby the user who input the unbinding command can clearly know the unbinding result. It improves the interaction between the terminal device and the user.

It can be seen that implementing the terminal device shown in FIG. 8, the security of data transmission during the binding process between the terminal device and the in-vehicle electronic device of the vehicle can be improved. In addition, it improves the interaction between the terminal device and the user by implementing the terminal device shown in FIG. 8.

### A ninth embodiment

Please refer to FIG. 9, FIG. 9 is a schematic structural view of a terminal device to the ninth embodiment of the present application. The terminal device shown in FIG. 9 is optimized by the terminal device shown in FIG. 8. Comparing to the terminal device shown in FIG. 8, The terminal device shown in FIG. 9 describes the method of extracting the device fingerprint of the terminal device in more detail, which can make the information related to the terminal device and contained in the device fingerprint more comprehensive. The extracting module 801 of the terminal device shown in FIG. 9 may include an extracting sub-module 8011 and a generating sub-module 8012.

The extracting sub-module 8011 is configured to extract a plurality of device fingerprint feature values of the terminal, when the input binding command is detected.

The generating sub-module 8012 is configured to generate the device fingerprint extracted by the extracting sub-module 8011 according to the plurality of device fingerprint feature values, and generate a service key, wherein the service key is a service public-private key pair or a service symmetric key.

In the embodiment of the present application, the plurality of device fingerprint feature values can be extracted, and the device fingerprint generated according to the plurality of device fingerprint feature values, it can make the information related to the terminal device, contained in the device fingerprint more comprehensive.

It can be seen that implementing the terminal device shown in FIG. 9, the security of data transmission during the binding process between the terminal device and the in-vehicle electronic device of the vehicle can be improved. In addition, it can make the information related to the terminal device, contained in the device fingerprint more comprehensive by implementing the terminal device described in FIG. 9.

### A tenth embodiment

Please refer to FIG. 10, FIG. 10 is a schematic structural view of a service server to the tenth embodiment of the present application. As shown in FIG. 10, the service server may include a second storing module 1001, a second sending module 1002 and a third sending module 1003.

The second storing module 1001 is configured to store the device fingerprint when device feature information sent from a terminal device is received and a service key included the device feature information, user account information of the terminal device, and waited to be bound vehicle information matched with the user account information, send the device feature information to a security server, thereby the security server perform a signature and encryption operation on the device feature information.

The second sending module 1002 is configured to send the target device feature information to an in-vehicle electronic device matched with the waited to be bound vehicle information, thereby make the in-vehicle electronic device to store the target device feature information, when that target device feature information, after the signature and encryption operation, is fed back by the security server is detected.

The third sending module 1003 is configured to send the binding result to the terminal device, when a binding result sent from the in-vehicle electronic device is received.

As an optional implementation, the third sending module 1003 is further configured to identify the waited to be unbound vehicle information and the unbound account information included in the unbinding command, when the unbinding command sent by the terminal device is received, and obtain the waited to be unbound device feature information that matches the waited to be unbound vehicle information and the unbound account information, send the waited to be unbound device feature information to the security server, so that the security server can sign and encrypt the waited to be unbound device feature information, wherein the waited to be unbound device feature information may include a waited to be unbound device fingerprint and the service key, and send the waited to be unbound device feature information after the signature and encryption operation, when the waited to be unbound device feature information after the signature and encryption operation sent from the security server is received, to the in-vehicle electronic device that matches the waited to be unbound device feature information, then send the unbinding result to the terminal device, when the unbinding result sent from the in-vehicle electronic device is received.

Wherein, by implementing above implementation, the service server can obtain the waited to be unbound device feature information according to the unbinding command, and send the waited to be unbound device feature information after the signature and encryption operation to the in-vehicle electronic device, so that the in-vehicle electronic device delete the waited to be unbound device feature information, which realizes the unbound operation of the terminal device and the in-vehicle electronic device. Then the unbinding result is sent to the terminal device, so that the user of the terminal device can know the unbinding result in time.

By implementing the service server described in FIG. 10, the security of data transmission during the binding process between the terminal device and the in-vehicle electronic device of the vehicle can be improved. In addition, the terminal device can know the unbinding result in time by implementing the service server described in FIG. 10.

### An eleventh embodiment

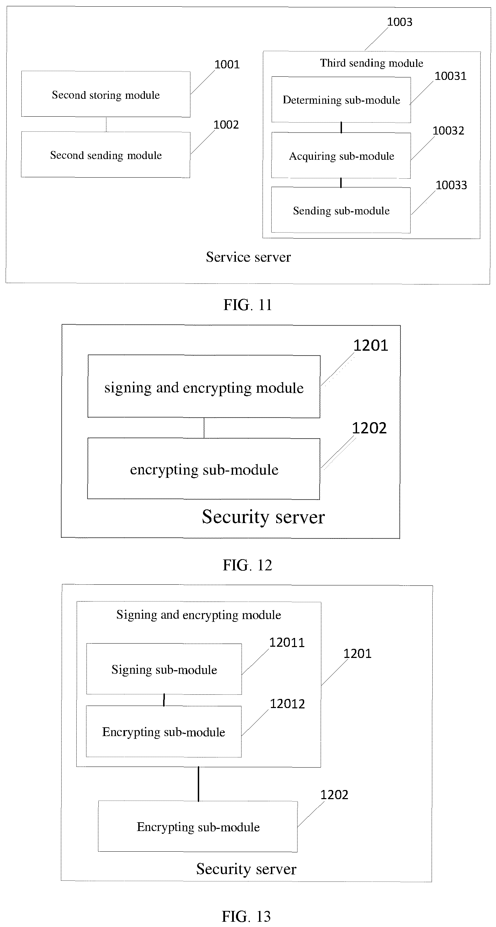

Please refer to FIG. 11, FIG. 11 is a schematic structural view of a service server to the eleventh embodiment of the present application. Wherein the service server shown in FIG. 11 is optimized by the service server shown in FIG. 10. Comparing to the service server shown in FIG. 10, The service server shown in FIG. 11 adds a method for binding the Bluetooth information with the device feature information, which ensures that the information stored in the service server has timeliness. As shown in FIG. 11, the third sending module 1003 of the service server may include a determining sub-module 10031, an acquiring sub-module 10032 and a sending sub-module 10033.

The determining sub-module 10031 is configured to determine whether the binding result is a successful binding, when the binding result sent from the in-vehicle electronic device is received.

The acquiring sub-module 10032 is configured to acquire Bluetooth information included in the binding result, when the binding result determined by the determining sub-module 10031 is the successful binding, wherein the Bluetooth information at least includes a Bluetooth address and a Bluetooth name.

The sending sub-module 10033 is configured to associate and store the Bluetooth information acquired by the acquiring sub-module 10032, the user account information of the terminal device, the waited to be bound vehicle information, and the device fingerprint and the service key included in the device feature information, and send the binding result to the terminal device.

In the embodiment of the present application, the Bluetooth information fed back by the in-vehicle electronic device can be stored in association with the device feature information, so that the service server can associate and store the information of the terminal device and the in-vehicle electronic device with the binding relationship in it, ensuring the information stored in the service server is timeliness.

By implementing the service server described in FIG. 11, the security of data transmission during the binding process between the terminal device and the in-vehicle electronic device of the vehicle can be improved. In addition, the timeliness of the information stored in the service server can be improved by implementing the service server described in FIG. 11.

### A twelfth embodiment

Please refer to FIG. 12, FIG. 12 is a schematic structural view of a security server to the twelfth embodiment of the present application. As shown in FIG. 12, the security server may include a signing and encrypting module 1201 and an encrypting sub-module 1202.

The signing and encrypting module 1201 is configured to perform a signature and encryption operation on the device feature information, thereby obtain target device feature information, when device feature information sent by a service server is received.

The fourth sending module 1202 is configured to send the target device feature information obtained by the signing and encrypting module 1201 to the service server.

As an optional implementation, the fourth sending module 1202 is further configured to perform a signature and encryption operation on the waited to be unbound device feature information, and obtain the waited to be unbound device feature information after signature and encryption operation, and send the waited to be unbound device feature information after signature and encryption operation, to the service server.

Wherein, by implementing above steps, the waited to be unbound device feature information sent by the service server can be signed and encrypted, so that the waited to be unbound device feature information, sent from the service server to the in-vehicle electronic device, is signed and encrypted, ensuring the security of the waited to be unbound device feature information transmission between the service server and the in-vehicle electronic device.

By implementing the security server described in FIG. 12, it can improve the security of data transmission in the binding process between the terminal device and the in-vehicle electronic device of the vehicle. In addition, it can ensure the security of the waited to be unbound device feature information between the service server and the in-vehicle electronic device by implementing the security server described in FIG. 12.

### A thirteenth embodiment

Please refer to FIG. 13, FIG. 13 is a schematic structural view of a security server to the thirteenth embodiment of the present application. Wherein the security server shown in FIG. 13 is optimized by the security server shown in FIG. 12. Comparing to the security server shown in FIG. 12, The security server shown in FIG. 13 describes the signature and encryption operations for device feature information in more detail, which ensures the security of data during transmission. As shown in FIG. 13, the signing and encrypting module 1201 of the security server may include a signing sub-module 12011 and an encrypting sub-module 12012.

The signing sub-module 12011 is configured to apply a signature on the device feature information through a preset private key, when the device feature information sent by the service server is received, thereby obtain signature device feature information.

The encrypting sub-module 12012 is configured to perform a symmetric encryption operation on the signature device feature information obtained by the signing sub-module 12011 with a preset symmetric key, thereby obtain the target device feature information.

In the embodiment of the present application, the device feature information can be digitally signed, and then the signature device feature information can be encrypted to obtain the encrypted target device feature information, so that the data transmitted with the in-vehicle electronic device is encrypted data, thereby ensuring the security of data during transmission.

It can be seen that implementing the security server described in FIG. 13, it can improve the security of data transmission in the binding process between the terminal device and the in-vehicle electronic device of the vehicle. In addition, because the data transmitted with the in-vehicle electronic device is encrypted data, the security of data during the transmission can be ensured by implementing the security server described in FIG. 6.

### A fourteenth embodiment

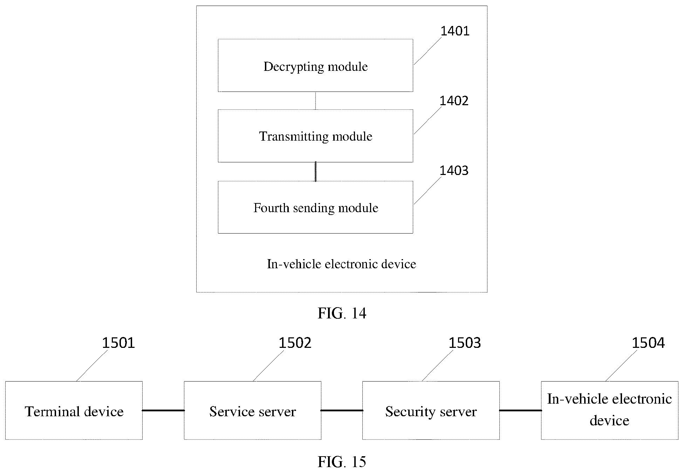

Please refer to FIG. 14, FIG. 14 is a schematic structural view of an in-vehicle electronic device to the fourteenth embodiment of the present application. As shown in FIG. 14, the in-vehicle electronic device may include a decrypting module 1401, a transmitting module 1402 and a fourth sending module 1403.

The decrypting module 1401 is configured to perform a decryption and verification operation on the target device feature information via the in-vehicle security module when target device feature information sent form a service server is received by an in-vehicle security module of an in-vehicle electronic device, thereby obtain current device feature information.

The transmitting module 1402 is configured to store the current device feature information obtained by the decrypting module 1401 via an external Bluetooth module, and transmit a storage result and the Bluetooth information corresponding to the external Bluetooth module to the in-vehicle security module, wherein the Bluetooth information includes a Bluetooth address and a Bluetooth name of the external Bluetooth module.

The fourth sending module 1403 is configured to generate, via the in-vehicle security module, a binding result including the storage result and the Bluetooth information transmitted from the transmitting module 1402, and via the in-vehicle security module, send the binding result to the service server.

As an optional implementation, the fourth sending module 1403 is further configured to send form the service server, the in-vehicle electronic device perform a decryption and verification operation on the waited to be unbound after encryption operation via the in-vehicle security module when the waited to be unbound information after encryption operation is received by the in-vehicle security module of the in-vehicle electronic device, thereby obtain target waited to be unbound device feature information, and delete the target waited to be unbound device feature information via the external Bluetooth module and transmit a deleting result to the external Bluetooth module, then determine the deleting result is a unbinding result, and send the unbinding result to the service server via the in-vehicle security module.

Wherein, by implementing above implementation, the target waited to be unbound device feature information can be found and deleted according to the waited to be unbound information after encryption operation sent from the service server, the unbinding operation of the terminal device and the in-vehicle electronic device can be realized, thereby the accuracy of the binding operation can be improved.

It can be seen that implementing the in-vehicle electronic device described in FIG. 14, the security of data transmission in the binding process between the terminal device and the in-vehicle electronic device of the vehicle can be improved. In addition, the accuracy of the binding operation can be improved by implementing the in-vehicle electronic device described in FIG. 14.

### A fifteenth embodiment

Please refer to FIG. 15, FIG. 15 a schematic structural view of a system for binding a virtual key to the fifteenth embodiment of the present application. As shown in FIG. 15, the system for binding a virtual key may include aterminal device 1501, a service server 1502, a security server 1503 and an in-vehicle electronic device 1504. Wherein In the embodiment of the present application. The structure and function of the terminal device 1501 are the same as the structure and function of any of the terminal devices described in the eighth and ninth embodiments, and will not be repeated In the embodiment of the present application. The structure and function of the service server 1502 are the same as the structure and function of any of the service devices described in the tenth and eleventh embodiments, and will not be repeated In the embodiment of the present application. The structure and function of the security server 1503 are the same as the structure and function of any of the security server described in the twelfth and thirteenth embodiments, and will not be repeated In the embodiment of the present application. The structure and function of the in-vehicle electronic device 1504 are the same as the structure and function of the in-vehicle electronic device described in the fourteenth embodiment, and will not be repeated In the embodiment of the present application.

### A sixteenth embodiment

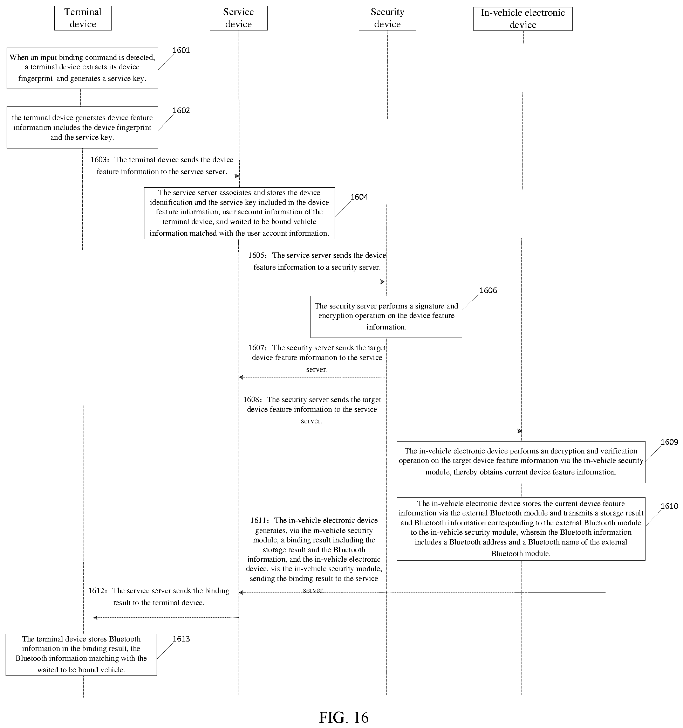

Please refer to FIG. 16, FIG. 16 is a schematic flowchart view of another method for binding a virtual key to the sixteenth embodiment of the present application. As shown in FIG. 15, the method for binding a virtual key may include the following steps:
In a step 1601, when an input binding command is detected, a terminal device extracts its device fingerprint and generates a service key.
In a step 1602, the terminal device generates device feature information includes the device fingerprint and the service key.
In a step 1603, the terminal device sends the device feature information to the service server.
In a step 1604, the service server associates and stores the device fingerprint and the service key included in the device feature information, user account information of the terminal device, and waited to be bound vehicle information matched with the user account information.
In a step 1605, the service server sends the device feature information to a security server.
In a step 1606, the security server performs a signature and encryption operation on the device feature information.
In a step 1607, the security server sends the target device feature information to the service server.
In a step 1608, the service server sends the target device feature information to an in-vehicle electronic device matched with the waited to be bound vehicle information.
In a step 1609, the in-vehicle electronic device performs an decryption and verification operation on the target device feature information via the in-vehicle security module, thereby obtains current device feature information.
In a step 1610, the in-vehicle electronic device stores the current device feature information via the external Bluetooth module and transmits a storage result and Bluetooth information corresponding to the external Bluetooth module to the in-vehicle security module, wherein the Bluetooth information includes a Bluetooth address and a Bluetooth name of the external Bluetooth module.
In a step 1611, the in-vehicle electronic device generates, via the in-vehicle security module, a binding result including the storage result and the Bluetooth information, and the in-vehicle electronic device, via the in-vehicle security module, sending the binding result to the service server.
In a step 1612, the service server sends the binding result to the terminal device.
In a step 1613, the terminal device stores Bluetooth information in the binding result, the Bluetooth information matching with the waited to be bound vehicle.

It can be seen that implementing the method for binding a virtual key described in FIG. 16, the device feature information generated according to the terminal device can be sent to the service server, so that the service server can store the device feature information and send the device feature information to the security server. Thereby the security server can perform an encryption operation on the device feature information and bind the device feature information after encryption with the in-vehicle electronic device, so that the data transmitted by the terminal device during the binding operation with the in-vehicle electronic device is encrypted data, which avoids Leakage caused by data loss, and improves the security of data transmission during the binding process of the terminal device and the in-vehicle electronic device.

This embodiment of the present application further discloses a vehicle, wherein the in-vehicle electronic device 1504 is set on the vehicle.

This embodiment of the present application further discloses a computer readable storage medium, wherein the storage medium having program code stored therein, the program code may include instructions for executing part or all of the steps in the various methods describes in above-mentioned embodiment.

This embodiment of the present application further discloses a storage medium having program stored therein, when the program is executed on a computer, the computer executes part or all of the steps in the various methods describes in above-mentioned embodiment.

This embodiment of the present application further discloses an application publishing platform, wherein the application publishing platform configured to publish computer program, when the program is executed on a computer, the computer executes part or all of the steps in the various methods describes in above-mentioned embodiment.

It should be understood, "embodiment of the present application" mentioned in the specification means that a specific feature, structure, or characteristic related to the embodiment is included in at least one embodiment of the present application. Therefore, the appearance of "in the embodiment of the present application" in various places throughout the specification does not necessarily refer to the same embodiment. In addition, these specific features, structures or characteristics can be combined in one or more embodiments in any suitable manner. Those skilled in the art should also know that the embodiments described in the specification are optional embodiments, and the actions and modules involved are not necessarily required by the present application.

In the various embodiments of the present application, it should be understood that the sequence numbers of the aforementioned processes does not mean the necessary sequence of execution. The execution order of each process should be determined by its function and internal logic, and should not be regarded as a limitation to the embodiment of the present application.

In addition, the terms "system" and "network" in this article are often used interchangeably in this article. It should be understood that "B corresponding to A" means that B is associated with A, and B can be determined according to A. However, it should also be understood that determining B according to A does not mean determining B only according to A, and B can also be determined according to A and/or other information.

Those of ordinary skill in the art can understand that all or part of the steps in the various methods of the above-mentioned embodiments can be completed by a program instructing relevant hardware. The program can be stored in a computer-readable storage medium. The storage medium includes read-only Memory (ROM), Random Access Memory (RAM), Programmable Read-only Memory (PROM), Erasable Programmable Read Only Memory (EPROM), One-time Programmable Read-Only Memory (OTPROM), Electronically-Erasable Programmable Read-Only Memory (EEPROM), CD-ROM (Compact Disc Read-Only Memory, CD-ROM) or other optical disk storage, magnetic disk storage, tape storage, or any other computer-readable medium that can be used to carry or store data.

The modules described above as separate components may or may not be physically separated, the components displayed as modules may or may not be physical modules, and may be located in one place or distributed on multiple network units. Some or all of the modules can be selected according to actual needs to achieve the purpose of the solution of the embodiment.

In addition, the functional modules in the embodiments of the present application may be integrated into one processing unit, or each unit may exist alone physically, or two or more modules may be integrated into one unit. The above-mentioned integrated unit can be realized in the form of hardware or software functional unit.

If the above integrated unit is implemented in the form of a software functional unit and sold or used as an independent product, it can be stored in a computer-accessible memory. Based on this understanding, the essence of the technical solution of the present application, or the part that contributes to the of prior art, or the all or part of the technical solution can be implemented in the form of a software product, and the software is stored in a memory. The software includes several requests to make a computer (such as a personal computer, a server or a network device, etc., specifically a processor in a computer device) execute part or all of the steps of the above mentioned methods of the various embodiments of the present application.

Above is a detailed introduction of the method and system for binding a virtual key provided by the embodiments of the invention. In this paper, specific examples are applied to elaborate the principle and implementation mode of the invention. The explanation of the above embodiments is only used to help understand the method of the invention and its core idea; Meanwhile, for technicians in the field, according to the idea of the invention, there will be changes in the specific implementation mode and application scope. In conclusion, the contents of this specification shall not be interpreted as restrictions on the invention.

## Claims

1. A method for binding a virtual key, **characterized by** comprising:
when detecting an input binding command, a terminal device extracting its device fingerprint and generating a service key;
generating, by the terminal device, device feature information includes the device fingerprint and the service key;
sending the device feature information to a service server by the terminal device, thereby enabling the service server to store the device feature information in an in-vehicle electronic device of a waited to be bound vehicle; and
when detecting that a binding result sent from the service server is a successful binding, the terminal device storing Bluetooth information in the binding result, the Bluetooth information matching with the waited to be bound vehicle.

2. The method of claim 1, wherein the operation of when detecting an input binding command, a terminal device extracting its fingerprint and generating a service key comprises:
extracting, by the terminal device, a plurality of device fingerprint feature values of the terminal device when detecting the input binding command; and
generating, by the terminal device, the device fingerprint according to the plurality of device fingerprint feature values, and generating a service key, wherein the service key is a service public-private key pair or a service symmetric key.

3. A method for binding a virtual key, comprising:
when receiving device feature information sent from a terminal device, a service server associating and storing a device fingerprint and a service key included in the device feature information, user account information of the terminal device, and waited to be bound vehicle information matched with the user account information; and the service server sending the device feature information to a security server, thereby the security server performing a signature and encryption operation on the device feature information;
when detecting that target device feature information, after the signature and encryption operation, is fed back by the security server, the service server sending the target device feature information to an in-vehicle electronic device matched with the waited to be bound vehicle information, thereby making the in-vehicle electronic device to store the target device feature information; and
when receiving a binding result sent from the in-vehicle electronic device, the service server sending the binding result to the terminal device.

4. The method of claim 3, wherein the operation of when receiving the binding result sent from the in-vehicle electronic device, the service server sending the binding result to the terminal device comprises:
when receiving the binding result sent from the in-vehicle electronic device, the service server determining whether the binding result is a successful binding;
when the binding result is the successful binding, the service server acquiring Bluetooth information included in the binding result, wherein the Bluetooth information at least includes a Bluetooth address and a Bluetooth name; and
the service server associating and storing the Bluetooth information, the user account information of the terminal device, the waited to be bound vehicle information, and the device fingerprint and the service key included in the device feature information; and the service server sending the binding result to the terminal device.

5. A method for binding a virtual key, comprising:
when receiving device feature information sent by a service server, a security server performing a signature and encryption operation on the device feature information thereby obtaining target device feature information; and
the security server sending the target device feature information to the service server.

6. The method of claim 5, wherein the operation of when receiving device feature information sent by the service server, the security server performing a signature and encryption operation on the device feature information thereby obtaining target device feature information comprises:
when receiving the device feature information sent by the service server, the security server applying a digital signature on the device feature information through a preset private key, thereby obtaining signature device feature information; and
the security server performing a symmetric encryption operation on the signature device feature information with a preset symmetric key, thereby obtaining the target device feature information.

7. A method for binding a virtual key, comprising:
when an in-vehicle security module of an in-vehicle electronic device receiving target device feature information sent form a service server, the in-vehicle electronic device performing an decryption and verification operation on the target device feature information via the in-vehicle security module, thereby obtaining current device feature information;
the in-vehicle electronic device storing the current device feature information via an external Bluetooth module and transmitting a storage result and Bluetooth information corresponding to the external Bluetooth module to the in-vehicle security module, wherein the Bluetooth information includes a Bluetooth address and a Bluetooth name of the external Bluetooth module; and
the in-vehicle electronic device generating, via the in-vehicle security module, a binding result including the storage result and the Bluetooth information, and the in-vehicle electronic device, via the in-vehicle security module, sending the binding result to the service server.

8. A terminal device, comprising:
an extracting module, configured to extract its device fingerprint and generate a service key when detecting a input binding command;
a generating module, configured to generate device feature information includes the device fingerprint and the service key;
a first sending module, configured to send the device feature information to a service server; and
a first storing module, configured to store Bluetooth information in the binding result, the Bluetooth information matching with the waited to be bound vehicle, when detecting that a binding result sent from the service server is a successful binding.

9. The terminal device of claim 8, wherein the extracting module comprising:
an extracting sub-module, configured to extract a plurality of device fingerprint feature values of the terminal, when detecting the input binding command; and
a generating sub-module, configured to generate the device fingerprint according to the plurality of device fingerprint feature values, and generate a service key, wherein the service key is a service public-private key pair or a service symmetric key.

10. A service server, comprising:
a second storing module, configured to store a device fingerprint when receiving device feature information sent from a terminal device and a service key included the device feature information, user account information of the terminal device, and waited to be bound vehicle information matched with the user account information, send the device feature information to a security server, thereby the security server performs a signature and encryption operation on the device feature information;
a second sending module, configured to send the target device feature information to an in-vehicle electronic device matched with the waited to be bound vehicle information, when detecting that target device feature information, after the signature and encryption operation, is fed back by the security server, thereby makes the in-vehicle electronic device to store the target device feature information; and
a third sending module, configured to send the binding result to the terminal device when receiving a binding result sent from the in-vehicle electronic device.

11. The server of claim 10, wherein the third sending module comprising:
a determining sub-module, configured to determine whether the binding result is a successful binding when receiving the binding result sent from the in-vehicle electronic device;
an acquiring sub-module, configured to acquire Bluetooth information included in the binding result when the binding result is the successful binding, wherein the Bluetooth information at least includes a Bluetooth address and a Bluetooth name; and
a sending sub-module, configured to associate and store the Bluetooth information, the user account information of the terminal device, the waited to be bound vehicle information, and the device fingerprint and the service key included in the device feature information, and sends the binding result to the terminal device.

12. A security server, comprising:
a signing and encrypting module, configured to perform a signature and encryption operation on the device feature information thereby obtains target device feature information when receiving device feature information sent by a service server; and
a fourth sending module, configured to send the target device feature information to the service server.

13. The server of claim 12, wherein the signing and encrypting module comprising:
a signing sub-module, configured to apply a signature on the device feature information through a preset private key when receiving the device feature information sent by the service server, thereby obtains signature device feature information; and
an encrypting sub-module, configured to perform a symmetric encryption operation on the signature device feature information with a preset symmetric key, thereby obtains the target device feature information.

14. An in-vehicle electronic device, comprising:
a decrypting module, configured to perform a decryption and verification operation on the target device feature information via the in-vehicle security module when an in-vehicle security module of an in-vehicle electronic device receiving target device feature information sent form a service server, thereby obtains current device feature information;
a transmitting module, configured to store the current device feature information via an external Bluetooth module, and transmit a storage result and the Bluetooth information corresponding to the external Bluetooth module to the in-vehicle security module, wherein the Bluetooth information includes a Bluetooth address and a Bluetooth name of the external Bluetooth module; and
a fourth sending module, configured to generate, via the in-vehicle security module, a binding result including the storage result and the Bluetooth information, and via the in-vehicle security module, send the binding result to the service server.

15. A system for binding a virtual key, comprising:
a terminal device, configured to extract a device fingerprint itself and generate a service key when detecting a input binding command, generate device feature information including the device fingerprint and the service key, send the device feature information to a service server, thereby enables the service server to store the device feature information in an in-vehicle electronic device of a waited to be bound vehicle, and when detecting that a binding result sent from the service server is a successful binding, store Bluetooth information in the binding result, the Bluetooth information matching with the vehicle;
the service server, configured to store the device fingerprint and the service key included in the device feature information, user account information of the terminal device, and waited to be bound vehicle information matched with the user account information when receiving device feature information sent from a terminal device, send the device feature information to a security server, thereby the security server performs a signature and encryption operation on the device feature information, when detecting that target device feature information, after the signature and encryption operation, is fed back by the security server, send the target device feature information to an in-vehicle electronic device matched with the waited to be bound vehicle information, thereby makes the in-vehicle electronic device to store the target device feature information, and when receiving a binding result sent from the in-vehicle electronic device, send the binding result to the terminal device;
the security server, configured to perform a signature and encryption operation on the device feature information when receiving device feature information sent by the service server thereby obtains target device feature information, and send the target device feature information to the service server; and
the in-vehicle electronic device, configured to perform a decryption and verification operation on the target device feature information via the in-vehicle security module when an in-vehicle security module of an in-vehicle electronic device receiving target device feature information sent form the service server, thereby obtains current device feature information, store the current device feature information via an external Bluetooth module, and transmit a storage result and the Bluetooth information corresponding to the external Bluetooth module to the in-vehicle security module, wherein the Bluetooth information includes a Bluetooth address and a Bluetooth name of the external Bluetooth module, and generates, via the in-vehicle security module, a binding result including the storage result and the Bluetooth information, and via the in-vehicle security module, sends the binding result to the service server.

16. A vehicle, the vehicle comprising the in-vehicle electronic device of claim 14.
